Europäisches Patentamt

European Patent Office

Office européen des brevets

(19)

(11) Publication number: **0 245 092 B1**

# EUROPEAN PATENT SPECIFICATION

(45) Date of publication of patent specification: **25.09.91**   (51) Int. Cl.⁵: **H01C 7/00, H01C 17/24**

(21) Application number: **87304044.8**

(22) Date of filing: **06.05.87**

(54) **Thermo-sensitive resistor.**

(30) Priority: **07.05.86 JP 103178/86**

(43) Date of publication of application:
**11.11.87 Bulletin 87/46**

(45) Publication of the grant of the patent:
**25.09.91 Bulletin 91/39**

(84) Designated Contracting States:
**DE FR GB**

(56) References cited:
**CH-A- 482 379**
**US-A- 2 942 331**
**US-A- 4 323 875**

**CHEMICAL ABSTRACTS, vol. 79, no. 24, 17th
December 1973, abstract no. 140660w, Co-
lumbus, Ohio, US; "Platinum thin-film ther-
mistor", & PR. NAUK. INST. TECHNOL. ELEK-
TRON. POLITECH. WROCLAW. 1973, no.
9,43-54**

(73) Proprietor: **NGK INSULATORS, LTD.**
**2-56, Suda-cho, Mizuho-ku**
**Nagoya City Aichi Pref.(JP)**

(72) Inventor: **Kikuchi, Toru**
**NGK Takemi-Ryo 34 Takemi-Cho, 1-chome**
**Mizuho-ku**
**Nagoya City Aichi Pref.(JP)**
Inventor: **Yajima, Yasuhito**
**NGK Ichioka-Ryo 38-2, Ichioka-Cho 2-ch.**
**Mizuho-Ku**
**Nagoya City Aichi Pref.(JP)**

(74) Representative: **Paget, Hugh Charles Edward
et al**
**MEWBURN ELLIS & CO. 2/3 Cursitor Street
London EC4A 1BQ(GB)**

## Description

The present invention relates to a thermo-sensitive resistor used, for example, for detecting an amount of fluid flow in an internal combustion engine by utilizing the temperature dependence of the resistivity of the resistor.

Adjustment of resistivity of such a thermo-sensitive resistor having a thin-film resistor element formed by the sputtering method or the evaporation method has been performed by the laser trimming method as disclosed, for example, in Japanese Patent Laid-Open Publication No. l75,580/84.

However, if the resistivity adjustment of the thin-film resistor element having thickness variations is performed by the laser trimming method, the trimming operation must be stopped when the resistivity reaches to the predetermined value. That is to say, it is necessary to change the trimming area for each particular sample so as to adjust the resistivity to the desired value when trimming resistor elements having the same dimension but each having different thickness, so that there is a drawback that the area for heating in use varies in each case if the laser trimming is performed.

Since the area for heating varies between thermo-sensitive resistors, a temperature distribution of the thermo-sensitive resistor varies in each case correspondingly and the diffusion of heat in the resistor is also varied. Therefore, when an amount or a speed of fluid flow is to be detected by using the thermo-sensitive resistor mentioned above, characteristics of the detector utilizing the thermosensitive resistor such as a detection accuracy and a response are varied.

Mention is made of US-A-2 942 331, which describes the anodic solution of a resistor layer applied to the inside of a ceramic tube, in order to adjust the resistivity. The resistor is not a thermo-sensitive resistor, but is designed to have a fixed resistivity value.

The present invention has for its object to eliminate the drawbacks of thermo-sensitive resistors mentioned above and to provide a thermo-sensitive resistor having a pre-determined area for heating even if the resistivity adjustment is performed.

According to the invention, there is provided a thermo-sensitive resistor as set out in claim 1. There is further provided a method of making a thermo-sensitive resistor as set out in claim 3.

In the resistor of the invention, since the resistivity adjustment is performed by increasing a film thickness of the previously formed base portion of the resistor element by means of the electroplating etc., the area for heating of the thermo-sensitive resistor element can be always constant even if the resistivity adjustment is performed.

Referring to the accompanying drawings:-

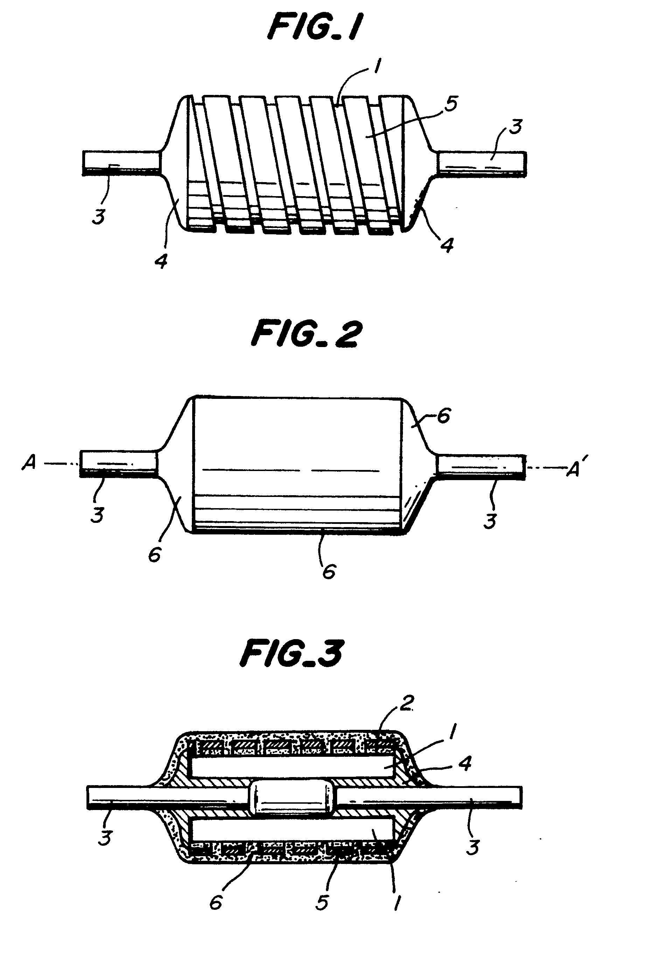

Fig. 1 is a schematic view showing one embodiment of a thermo-sensitive resistor according to the invention whose outer surface is not covered with a glass material;

Fig. 2 is a schematic view illustrating another embodiment of a thermo-sensitive resistor according to the invention whose outer surface is covered with a glass material; and

Fig. 3 is a cross sectional view depicting the embodiment cut along A-A' line in Fig. 2.

Hereinafter, features of the present invention will be explained.

At first, a base thin-film heating resistor element is formed on an electrically insulating substrate having a cylindrical. In this case, the sputtering method is preferably used for a good connection between the thin-film heating resistor element and the substrate. Alternatively, if simplicity of manufacturing method, simplicity of thin-film forming apparatus and low cost must be taking into consideration, the plating method is preferably used. Further, it is possible to use another thin-film forming technique such as the evaporation method.

Next, the thus obtained electrically insulating substrate having a cylindrical on which the base thin-film heating resistor element is formed is worked into a desired shape, and then lead wires are connected to the substrate for electric conduction and mechanical support to obtain a basic thermo-sensitive resistor to be treated.

Next, in order to adjust the resistivity of the thus obtained thermo-sensitive resistor to a predetermined value, the film thickness of the base thin-film heating resistor is increased by means of electroplating or electroless plating. In electroplating, the resistivity of the thermo-sensitive resistor is preferably adjusted by changing the time of plating operation while the density of direct current is maintained constant. It is also possible to use the constant voltage controlling method. Further, in the electroplating mentioned above, use is made of direct current, but alternating current may be applied during the electroplating operation to improve the connection strength and the accuracy of resistivity adjustment.

In electroless plating, a surface of the base thin-film heating resistor element is activated, and then the base thin-film heating resistor is immersed in an electroless plating solution for depositing a desired metal thereon and is taken out at a predetermined resistivity.

Furthermore, in order to prevent the variation in resistivity of the treated thin-film heating resistor element, heat treatment may be applied to the thin-film heating resistor element under a predetermined atmosphere and temperature. The material of the thin-film heating resistor element may be one or more of Pt, Au, Cr, Mo, W, Ni which show good chemical stability, high strength and high temperature coefficient of resistor. In this case, in order to improve the connection strength between the thin-film heating resistor element and the substrate, it is possible to form an inexpensive metal layer on the substrate by the sputtering method and to deposit the metal having good chemical stability and high temperature coefficient of resistor on the inexpensive metal layer by the plating method.

Hereinafter, particular embodiments of the present invention will be explained with reference to the drawings.

As shown in Figs. I-3, a photoresist is formed in a spiral shape on an outer surface of an insulation tube I made of alumina ceramics having an outer diameter of 0.5 mm, an inner diameter of 0.2 mm and a length of 2 mm, and a thin-film layer made of Pt having the thickness of about 0.I $\mu$m is formed by the sputtering method on the outer surface of the insulation tube I and on a surface of the photoresist. Then, the photoresist is burned out to form a base thin-film heating resistor element 2 having the spiral shape.

Next, Pt lead wires 3 having a diameter of 0.I5 mm are inserted into both end portions of the insulation tube I, and a space between the insulation tube I and the lead wire 3 is filled with a conductive paste 4 for electric conduction and mechanical support. Then, the heat treatment is performed at a temperature of 600-I,I00°C. After that, a Pt plating layer 5 having a thickness of 0.I-0.5 $\mu$m is formed by the electroplating method on the base thin-film heating resistor element 2 for a precise resistivity adjustment, and then further heat treatment is performed at a temperature of 600-I,I00°C.

Moreover, in the thermo-sensitive resistor for use in the detection of the flow amount or the flow speed of fluid, the heat conductivity between the thermo-sensitive resistor and the fluid becomes small due to the adhesion of foreign substances such as dust on a surface of the thermo-sensitive resistor, and thus the detection accuracy and the response becomes bad correspondingly. To prevent these disadvantages, a glass paste having a low melting point is painted on the surface of the thermo-sensitive resistor and the heat treatment is performed at a temperature of 500-700°C to form a glass coating layer 6 having a thickness below 20 $\mu$m, as shown in Figs. 2 and 3. The glass coating layer 6 functions to smooth the surface of the thermo-sensitive resistor, to decrease the adhesion of foreign substances such as dust on the surface of the thermo-sensitive resistor and to increase the adhesive force between the thin-film heating resistor and the substrate. Thereby, in the thermo-sensitive resistor for use in the detection of the flow amount or the flow speed of fluid, the variation on the detection accuracy or the response can be decreased and thus the durability of the thermo-sensitive resistor can be improved.

As mentioned above in detail, according to the invention, since the resistivity of the thin-film resistor can be adjusted without changing the area for heating of the thermo-sensitive resistor by increasing or decreasing the thickness of the thin-film heating resistor by using the electroplating or the electroless plating, the variation in the area for heating of the thermo-sensitive resistor can be decreased. Therefore, in the thermo-sensitive resistor for use in the detection of the flow amount or the flow speed of fluid, thermo-sensitive resistors having constant detection accuracy and response on the flow amount and the flow speed of fluid can be manufactured in a large scale.

Further, according to the invention, since devices for manufacturing the thermo-sensitive resistor can be made simple in construction and inexpensive in cost, it is possible to decrease the manufacturing cost.

## Claims

1. A thermo-sensitive resistor comprising an electrically insulating substrate (1) of cylindrical shape, a thin-film heating resistor element (2,5) formed on a surface of said substrate (1), and lead wires (3) connected electrically to said thin-film resistor element for electrical connection to external elements and for mechanical support, characterized in that the thin-film resistor element (2,5) is of spiral shape, is formed on the outer surface of the substrate and has a base portion (2) and a portion (5) formed on the base portion (2) by electroplating or electroless plating to adjust the resistivity of the resistor, and in that a glass coating layer (6) is applied to give said resistor a smooth outer surface.

2. A thermo-sensitive resistor according to claim 1 wherein said base portion (2) of the thin-film resistor is made of one or more of Pt, Au, Cr, Mo, W and Ni.

3. A method of making a thermo-sensitive resistor according to claim 1 by forming a thin-film heating resistor element (2,5) on a cylindrical shaped electrically insulating substrate (1), and thereafter adjusting the thickness of the element to alter its resistivity, characterized by forming a base portion (2) of said resistor element of spiral shape on an outer surface of the substrate and subsequently increasing its thickness by electroplating or electroless plating, in order to adjust its resistivity, and thereafter forming a glass coating layer (6) to give the resistor a smooth outer surface.

4. A method according to claim 3 wherein said base portion (2) of the thin-film heating resistor is formed on said substrate (1) by sputtering, evaporation or plating.

5. A method according to claim 3 or claim 4 wherein a heat treatment of said resistor element (2,5) is performed.

**Revendications**

1. Résistance thermosensible comprenant un substrat isolant électriquement (1) de forme cylindrique, un élément de résistance à la chaleur à couche mince (2,5) formé sur une surface dudit substrat (1), et des fils de plomb (3) reliés électriquement audit élément de résistance à couche mince pour une liaison électrique vers des éléments externes et pour un support mécanique, caractérisée en ce que l'élément de résistance à couche mince (2,5) a une forme en spirale, est formé sur la surface externe du substrat et a une partie de base (2) et une partie (5) formée sur la partie de base (2) par électro-déposition ou bien revêtement sans courant pour ajuster la résistivité de la résistance, et en ce qu'une couche de revêtement de verre (6) est appliquée pour donner à ladite résistance une surface externe lisse.

2. Résistance thermosensible selon la revendication 1, dans laquelle ladite partie de base 2 de ladite résistance à couche mince est constituée de l'un ou de plusieurs des éléments Pt, Au, Cr, Mo, W et Ni.

3. Procédé de réalisation d'une résistance thermosensible selon la revendication 1 en formant un élément de résistance à la chaleur à couche mince (2,5) sur un substrat isolant électriquement de forme cylindrique (1), et ensuite en ajustant l'épaisseur de l'élément pour modifier sa résistivité, caractérisé en ce qu'on forme une partie de base (2) dudit élément de résistance de forme en spirale sur une surface externe du substrat et en ce qu'on augmente ensuite son épaisseur par électro-déposition ou bien revêtement sans courant, de façon à ajuster sa résistivité, et ensuite en ce qu'on forme une couche de revêtement de verre (6) pour donner à la résistance une surface externe lisse.

4. Procédé selon la revendication 3, dans lequel ladite partie de base (2) de la résistance à la chaleur à couche mince est formée sur ledit substrat (1) par vaporisation, évaporation ou bien électro-déposition.

5. Procédé selon la revendication 3 ou 4, dans lequel un traitement à la chaleur dudit élément de résistance (2,5) est accompli.

**Patentansprüche**

1. Thermosensitiver Widerstand, umfassend ein elektrisch isolierendes Substrat (1) mit zylindrischer Form, ein Dünnfilm Heizwiderstandselement (2,5), das auf einer Oberfläche des Substrats (1) gebildet ist, und Zuführdrähte (3), die mit dem Dünnfilm-Widerstandselement elektrisch verbunden sind, zur elektrischen Verbindung mit äußeren Elementen und zur mechanischen Abstützung, dadurch **gekennzeichnet,** daß das Dünnfilm-Widerstandselement (2,5) auf der Außenfläche des Substrats spiralförmig ausgebildet ist und einen Basisbereich (2) und einen Bereich (5) hat, der auf den Basisbereich (2) galvanisch oder durch stromloses Beschichten aufgebracht ist, um den Widerstandswert des Widerstands einzustellen, und daß eine Glasbeschichtung (6) aufgebracht ist, um dem Widerstand eine glatte Außenfläche zu verleihen.

2. Thermosensitiver Widerstand nach Anspruch 1, wobei der Basisbereich (2) des Dünnfilm-Widerstands aus einem oder mehr der Elemente Pt, Au, Cr, Mo, W und Ni besteht.

3. Verfahren zur Herstellung eines thermosensitiven Widerstands nach Anspruch 1 durch Ausbilden eines Dünnfilm-Heizwiderstandselements (2,5) auf einem zylindrischen elektrisch isolierenden Substrat (1) und nachfolgendes Einstellen der Dicke des Elements, um dessen Widerstand zu verändern, **gekennzeichnet** durch Ausbilden eines spiralförmigen Basisbereichs (2) des Widerstandelements auf einer Außenfläche des Substrats und anschließendes Vergrößern seiner Dicke durch Galvanisieren oder stromloses Beschichten, um seinen Widerstand einzustellen, und anschließendes Ausbilden einer Glasbeschichtung (6), um dem Widerstand eine glatte Außenfläche zu verleihen.

4. Verfahren nach Anspruch 3, wobei der Basisbereich (2) des Dünnfilm-Widerstands auf dem Substrat (1) durch Zerstäuben, Verdampfen oder Galvanisieren gebildet wird.

5. Verfahren nach Anspruch 3 oder 4, wobei eine Wärmebehandlung des Widerstandselemente (2,5) durchgeführt wird.

## FIG. 1

## FIG. 2

## FIG. 3